**Europäisches Patentamt**

**European Patent Office**

**Office européen des brevets**

(19)

(11) Publication number: **0 098 721**
**B1**

(12) # EUROPEAN PATENT SPECIFICATION

(45) Date of publication of patent specification: **20.01.88**

(21) Application number: **83303690.8**

(22) Date of filing: **27.06.83**

(51) Int. Cl.⁴: **H 02 H 3/26**

(54) **Differential protection relay device.**

(30) Priority: **01.07.82 JP 115988/82**

(43) Date of publication of application:
**18.01.84 Bulletin 84/03**

(45) Publication of the grant of the patent:
**20.01.88 Bulletin 88/03**

(84) Designated Contracting States:
**DE FR GB SE**

(56) References cited:
**CH-A- 532 857**
**DE-A-2 846 570**
**DE-A-2 905 195**

(73) Proprietor: **MITSUBISHI DENKI KABUSHIKI KAISHA**
**2-3, Marunouchi 2-chome Chiyoda-ku Tokyo 100 (JP)**

(72) Inventor: **Ebisaka, Toshinobu**
**5-13, Midoriga-oka-cho Higashi 3-chome City of Miki Hyogo Prefecture (JP)**

(74) Representative: **Lawson, David Glynne et al**
**MARKS & CLERK 57-60 Lincoln's Inn Fields London WC2A 3LS (GB)**

Courier Press, Leamington Spa, England.

EP 0 098 721 B1

# Description

The present invention relates to a differential protection relay device which protects a section of lines or equipment in an electrical power system by finding the difference between currents measured by current transformers which are provided at the ends of the protected section.

The following description deals with a differential protection relay device which is capable of protecting a bus, which is most likely to be affected by saturation of the current transformers, against internal and external faults occurring at the same time.

In the accompanying drawings:—

Fig. 1 is a diagram showing a conventional setup for protecting a bus;

Fig. 2 is a diagram of current waveforms when both internal and external faults have developed; and

Fig. 3 is a diagram of current waveforms when d-c components are superposed on a fault current due to an external fault.

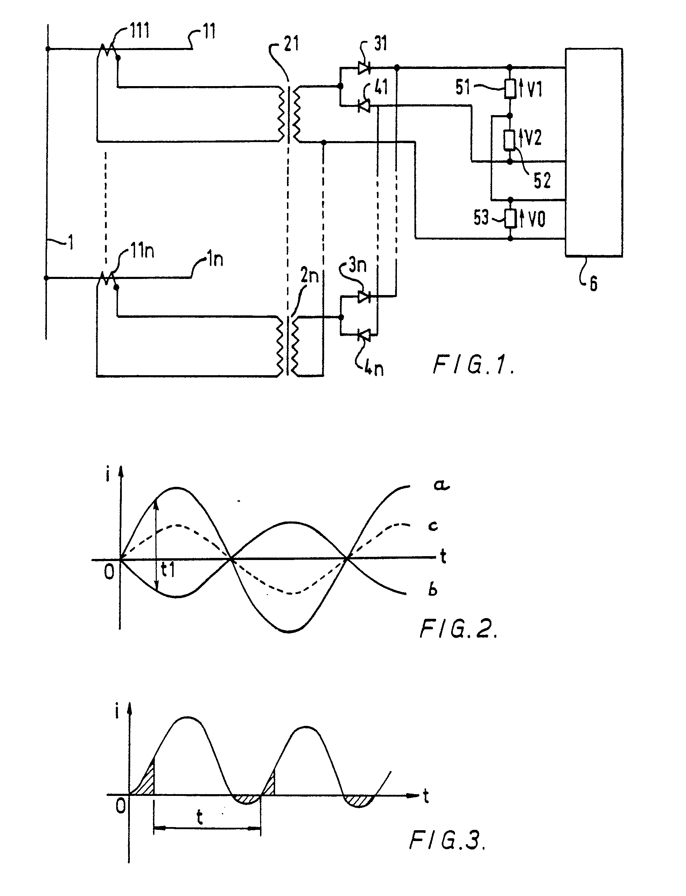

Fig. 1 shows a bus 1 that is to be protected, lines 11 to 1n connected to the bus, current transformers 111 to 11n which are installed on the lines and which derive secondary currents as the normal direction of current flowing into the protected section, input transformers 21 to 2n in a device for protecting the bus, diodes 31 to 3n for synthesizing currents of positive half waves from the current waveforms derived by the current transformers 111 to 11n, diodes 41 to 4n for synthesizing currents of negative half waves, a resistor 51 for converting the positive half wave current into a voltage $V_1$, a resistor 52 for converting the negative half wave current into a voltage $V_2$, a resistor 53 for combining the positive and negative waves, i.e., for obtaining a differential voltage $V_0$, and a discrimination unit 6 which finally discriminates the occurrence of external or internal faults using the voltage corresponding to the sum of the abovesaid voltages

$$|V_1| + |V_2|$$

i.e., the resultant value of currents flowing into the protected sections and the resultant value of currents flowing therefrom, as an inhibiting force, and $V_0$ i.e., the voltage corresponding to the difference between the resultant value of currents flowing into the protected section and the resultant value of currents flowing therefrom, as an operating force.

The principle of operation will be described below. Under ordinary conditions when the current transformers are not saturated or when trouble has developed in an external portion, the resultant value of currents flowing into the bus 1 is equal to the resultant value of currents flowing out of the bus 1, according to Kirchhoff's law. Therefore,

$$V_0 = 0, \ |V_1| + |V_2| \neq 0, \ \text{and} \ |V_1| = |V_2|.$$

There is no operating force, and the discrimination unit 6 discriminates not to operate.

On the other hand, when there is an internal fault as well as an external fault, the resultant value of currents flowing into bus 1 and the resultant value of currents flowing out of bus 1 become unbalanced, so that

$$V_0 \neq 0, \ |V_1| + |V_2| \neq 0 \ (V_1 \neq V_2).$$

If the ratio of the operating force to inhibiting force exceeds a predetermined ratio, the discrimination unit 6 determines that an internal fault exists, and operates. Here, the basis for the predetermined ratio is illustrated in Fig. 2, in which the large wave-form (a) indicated by a solid line represents current which flows into the bus when a fault has developed in the bus, and the small waveform (b) represents current which flows out of the bus. In general, in protecting the bus, it is hoped that the relay will be able to work even when there is a variety of internal and external faults. For this purpose, the relay has been designed so as to operate when the ratio of current (b) flowing out of the bus to the current (a) flowing into the bus is 1/2 or less. Fig. 2 shows the case when the ratio is about 1/2, and the broken line of waveform (c) represents the differential current. That is, when the currents of Fig. 2 are present, the discrimination unit 6 of Fig. 1 receives inputs $V_0$ and $|V_1| + |V_2|$ at a ratio of 1 to 3. The condition of these inputs have a ratio characteristic that becomes an operational limit.

Fig. 3 shows a case when an external fault has developed, and d-c components are superposed on a fault current, i.e. saturation occurs in a current transformer at the terminal at which the fault has developed and so the current transformer produces a secondary current only during the periods indicated by the hatched areas. That is, the differential input becomes completely zero only during the periods indicated by hatched areas. In other portions, however, the ratio of $V_0$ to $|V_1| + |V_2|$ becomes 1 to 1 in some sections. Therefore, the inhibiting force becomes small relative to the operating force, and the discrimination unit discriminates towards operation even though the fault is external.

In the case of an external fault in which a d-c component is superposed on a fault current, therefore, discrimination as to whether the fault is internal or external must be made within a period of several milliseconds between the occurrence of the fault and the saturation of the current transformer, represented by the hatched areas in Fig. 3. After this, if the fault has been determined to have developed in an external region, the discrimination function may not operate reliably.

With the conventional differential protection relay which must effect discrimination at high speeds as mentioned above, therefore, there was the defect of an unwanted transient response being inevitably caused by noise in the system, when the transformers are saturated.

DE—A—2905915 describes a differential protection relay system designed to avoid faulty triggering due to differences in saturation properties of the current transformers. A trigger-inhibiting signal is produced if the net current (corresponding to $V_0$) exceeds a preset threshold, later than the inflowing or outflowing current ($V_1$, $V_2$) exceeds a corresponding threshold value, this being taken to indicate an external fault.

CH—A—532857 describes a differential protection relay system in which operation of the differential relay is blocked if the inflowing and outflowing current signals both exceed corresponding thresholds simultaneously, to avoid the effects of saturation of the current transformers on the actuation selectivity of the differential relay.

The object of the present invention is to eliminate the above-mentioned defects inherent in the conventional art. For this purpose, the invention provides a differential protection relay which is not affected by saturation of current transformers and which does not respond transiently.

According to the present invention there is provided a differential protection relay device for protecting a section of an electrical circuit, comprising current transformers for measuring the currents at the ends of the protected circuit section, means for determining therefrom the resultant value of current entering the section, the resultant value of current leaving the section, and any difference between said currents,

means providing a relay operating signal in response to the detection of such a difference.,

means restraining the operation of the relay if the ratio of the said resultant values is less than a predetermined threshold,

characterised by overriding means which prevents relay operation for a predetermined time following detection of equality of said resultant values and therefore absence of a fault in the said section.

Further features, which may be incorporated into embodiments of the present invention, are defined in claims dependent on claim 1.

In embodiments of the present invention, the resultant value of currents flowing into the protected section is compared with the resultant value of currents flowing out of the protected section to discriminate whether there is an internal or external fault, and the relay is so designed that it will not operate, regardless of the magnitude of the resultant values, until a predetermined period of time passes after the period in which the two resultant values are equal, indicating absence of an internal fault. Therefore, there is provided a differential protection relay which does not respond to transients in the presence of saturated current transformers.

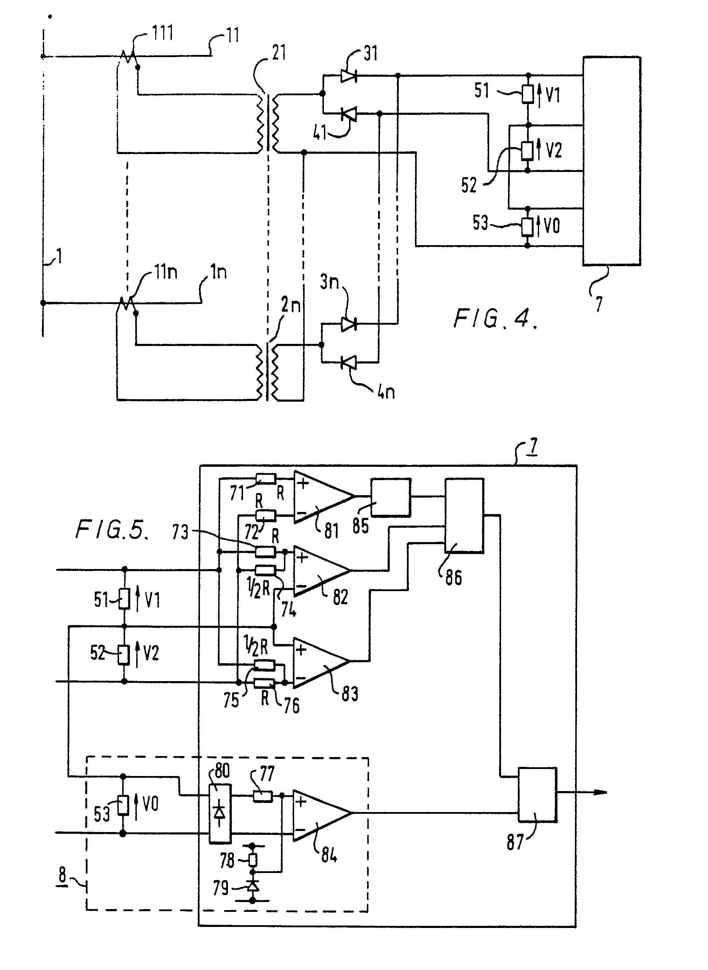

An embodiment of the invention will be described with reference to Figs. 4 and 5 of the accompanying drawings, in which:

Fig. 4 is a diagram showing a differential protection relay for bus protection, according to an embodiment of the present invention; and

Fig. 5 is a diagram of a discrimination unit used in the differential bus protection relay of the present invention.

Fig. 4 shows the general arrangement of a differential relay bus-protection system. The reference numeral 7 denotes a discrimination unit while the other reference numerals have the same meaning as in Fig. 1. Internal construction of the discrimination unit 7 of Fig. 4 is shown in Fig. 5, in which reference numerals 71, 72, - - -, 78 denote resistors, 79 denotes a constant-voltage diode, 80 denotes a rectifier, 81 to 84 denote arithmetic units, 85 denotes a timer which produces a signal for opening the gate of inhibit pulse generator 86 when the arithmetic unit 81 produces an output for a predetermined period of time, and 87 denotes a final discrimination timer which produces an output when the arithmetic unit 84 produces an output and when there is no pulse output from the inhibit pulse generator 86 for a predetermined period of time. Reference numeral 8 denotes a differential voltage detector.

Operation of the discrimination unit will be described below.

The arithmetic unit 81 produces an output when

$$|V_1| = |V_2|,$$

the arithmetic unit 82 produces an output when
$$1/2 \times |V_1| > |V_2|,$$

and the arithmetic unit 83 produces an output when

$$1/2 \times |V_2| > |V_1|.$$

Output of the arithmetic unit 82 or 83 interrupts the inhibit pulse from inhibit pulse generator 86 (inhibit pulses are produced at all times when they are not being interrupted. Further, the output of the timer 85 takes precedence, in the sense of signals, over the outputs of the arithmetic units 82, 83. Under ordinary conditions, when there is no internal fault and the current transformer is not saturated because of an external fault, the resultant value of currents flowing into bus 1 is equal to the resultant value of currents flowing out of the bus 1:

$$|V_1| = |V_2|,$$

arithmetic unit 81 produces an output, and the timer 85 produces an output after a predetermined period of time has passed. Therefore, the final discrimination timer 87 is inhibited at all times by the inhibit pulse generator 86, and the relay does not operate.

In the case of Fig. 2 in which an internal and external fault is present, the condition

$$1/2 \times |V_1| = |V_2| \text{ or } 1/2 \times |V_2| = |V_1|$$

holds true, and arithmetic units 82, 83 reach the output limit, i.e., operation limits of the relay. If the current (b) flowing out of the bus becomes less than one-half the current (a) which flows into the bus, then

$$1/2 \times |V_1| > |V_2| \text{ or } 1/2 \times |V_2| > |V_1|,$$

and a signal is sent from the arithmetic unit 82 or 83 to the inhibit pulse generator 86 to interrupt the production of inhibit pulses. Under this condition, if the differential voltage detector 8 produces an output, the final discrimination timer 87 confirms the fact that no output has been produced by the inhibit pulse generator 86 for a predetermined period of time, and discriminates the operation to detect an internal fault.

Here, the predetermined period of time set by the timer 85 is to prevent the arithmetic unit 81 from being erroneously operated by the deviation of phase between current flowing into the bus and current flowing out of the bus when there is an internal fault. The predetermined period of time set by the fault discrimination timer 87 is to prevent the arithmetic unit 82 or 83 from being erroneously operated by the deviation of phase between current flowing into the bus and current flowing out of the bus when a fault has developed in an internal portion.

In the case of an external fault of Fig. 3 in which d-c components are superposed on a fault current, the relation

$$|V_1| = |V_2|$$

holds in the hatched portions, whereby the arithmetic unit 81 and hence the timer 85 produces an output, and the inhibit pulse generator 86 continues to produce inhibit pulses. In this case, no output is produced from the arithmetic units 82, 83. Therefore, if the output produced from the timer 85 is stretched by a time t as shown in Fig. 3 to maintain the function of the inhibit pulse generator 86, inhibit pulses continue to be sent to the timer 87 for final discrimination even in the sections other than the hatched portions. Therefore, operation of the relay is inhibited no matter how erroneous outputs or differential outputs are produced by the differential voltage detector 8. That is, according to the present invention, the relay does not produce transient response, and makes discrimination at high speeds.

**Claims**

1. A differential protection relay device for protecting a section of an electrical circuit, comprising current transformers (111—11n) for measuring the currents at the ends of the protected circuit section,
means (51—53) for determining therefrom the resultant value (V1) of current entering the section, the resultant value (V2) of current leaving the section, and any difference (Vo) between said currents,
means (8) providing a relay operating signal in response to the detection of such a difference,
means (82, 83, 86, 87) restraining the operation of the relay if the ratio of the said resultant values is less than a predetermined threshold, characterised by overriding means (81, 85, 86, 87) which prevents relay operation for a predetermined time (t) following detection of equality of said resultant values (V1, V1) and therefore absence of a fault in the said section.

2. A differential protection relay device according to claim 1, wherein the means (8) providing a relay operating signal comprises:
a differential voltage detector (84) which receives the difference (Vo) between the resultant value (V1) of current flowing into the protected section and the resultant value (V2) of current flowing out from the protected section;
wherein the means (82, 83, 86, 87) restraining the operation of the relay includes an inhibit signal generator (82, 83, 86) which receives said resultant value (V1) of current flowing into the protected section and said resultant value (V2) of current flowing out from the protected section and which does not generate inhibit signals when one resultant value is greater than the other resultant value by more than a predetermined ratio, the arrangement being such that the differential protection relay operates when said inhibit signal generator is not generating inhibit signals and said differential voltage detector (84) is providing an output, and wherein the overriding means (81, 85, 86, 87) generates inhibit signals, irrespective of whether the differential voltage detector (84) is providing an output, for said predetermined period of time (t) following the end of a period in which said two resultant values (V1, V2) are equal.

3. A differential protection relay device as claimed in claim 2, in which said overriding means (81, 85, 86, 87) includes an arithmetic unit (81) which receives as respective inputs the said resultant values (V1, V2) and of which the output is connected to a timer (85) of which the output is connected to the inhibit signal generator (86), the output from the arithmetic unit representing equality of the resultant values (V1, V2), whereby the timer (85) provides an output signal ensuring continued generation of inhibit signals or said predetermined period (t) after cessation of said equality-representing output from the arithmetic unit (81).

**Patentansprüche**

1. Differentialschutz-Relaisanordnung zum Schutz eines Abschnitts einer elektrischen Schaltung, umfassend Stromtransformatoren (111—11n) zum Messen der Ströme an den Enden des geschützten Schaltungsabschnitts,
eine Einrichtung (51—53), um daraus den resultierenden Wert (V1) des in den Abschnitt hineinfließenden Stromes, den resultierenden Wert (V2) des aus dem Abschnitt austretenden Stromes und jede Differenz (Vo) zwischen den Strömen zu ermitteln,
eine Einrichtung (8), die ein Relais-Betätigungssignal in Abhängigkeit von der Feststellung einer solchen Differenz liefert, und eine Einrichtung (82, 83, 86, 87) zum Halten des Betriebes des Relais, wenn das Verhältnis des resultierenden Werte kleiner ist als ein vorgegebener Schwellwert, gekennzeichnet durch

eine Übersteuerungseinrichtung (81, 85, 87), die eine Relaisbetätigung für eine vorgegebene Zeitspanne (t) nach der Abtastung der Gleichheit des resultierenden Werte (V1, V2) und somit der Abwesenheit eines Fehlers in dem Abschnitt verhindert.

2. Differentialschutz-Relaisanordnung nach Anspruch 1, wobei die Einrichtung (8), die ein Relais-Betätigungssignal liefert, einen Spannungsdifferenzdetektor (84) aufweist, der die Differenz (Vo) zwischen dem resultierenden Wert (V1) des in den geschützten Abschnitt fließenden Stromes und dem resultierenden Wert (V2) des aus dem geschützten Abschnitt fließenden Stromes erhält; wobei die Einrichtung (82, 83, 86, 87) zum Halten des Betriebes des Relais einen Sperrsignalgenerator (82, 83, 86) aufweist, der den resultierenden Wert (V1) des in den geschützten Abschnitt fließenden Stromes und den resultierenden Wert (V2) des aus dem geschützten Abschnitt fließenden Stromes erhält und der keine Sperrsignale erzeugt, wenn der eine resultierende Wert um mehr als ein vorgegebenes Verhältnis größer ist als der andere resultierende Wert, wobei die Anordnung so getroffen ist, daß das Differentialschutzrelais dann arbeitet, wenn der Sperrsignalgenerator keine Sperrsignale erzeugt und der Spannungsdifferenzdetektor (84) ein Ausgangssignal liefert, und wobei die Übersteuerungseinrichtung (81, 85, 86, 87) unabhängig davon, ob der Spannungsdifferenzdetektor (84) ein Ausgangssignal liefert, Sperrsignale für die vorgegebene Zeitspanne (t) liefert, die dem Ende einer Periode folgt, in der die beiden resultierenden Werte (V1, V2) gleich sind.

3. Differentialschutz-Relaisanordnung nach Anspruch 2, wobei die Übersteuerungseinrichtung (81, 85, 86, 87) eine Recheneinheit (81) aufweist, die als jeweilige Eingangssignale die resultierenden Werte (V1, V2) erhält und deren Ausgang mit einer Zeitsteuerung (85) verbunden wird, deren Ausgang mit dem Sperrsignalgenerator (86) verbunden ist, wobei das Ausgangssignal von der Recheneinheit die Gleichheit der resultierenden Werte (V1, V2) repräsentiert, so daß die Zeitsteuerung (85) ein Ausgangssignal liefert, das die fortgesetzte Erzeugung von Sperrsignalen für die vorgegebene Zeitspanne (t) nach Beendigung des Gleichheit repräsentierenden Ausgangsignals von der Recheneinheit (81) gewährleistet.

**Revendications**

1. Un dispositif de relais de protection différentielle pour protéger une section d'un circuit électrique, comprenant des transformateurs de courant (111—11n) pour mesurer le courant aux extrémités de la section de circuit protégée,

des moyens (51—53) pour déterminer de ceux-i la valeur résultante (V1) de courant entrant dans la section, la valeur résultante (V2) de courant quittant la section, et toute différence (V0) entre lesdits courants,

un moyen (8) produisant un signal de fonctionnement de relais en réponse à la détection d'une telle différence,

des moyens (82, 83, 86, 87) restreignant le fonctionnement du relais si le rapport desdites valeurs résultantes est inférieur à un seuil prédéterminé,

caractérisé par un moyen de dérogation (81, 85, 86, 87) qui empêche le fonctionnement du relais pendant un temps prédéterminé (t) suivant une détection d'égalité desdites valeurs résultantes (V1, V2) et de ce fait une absence d'un défaut dans ladite section.

2. Un dispositif de relais de protection différentielle selon la revendication 1, dans lequel le moyen (8) produisant un signal de fonctionnement de relais comprend:

un détecteur de tension différentielle (84) qui reçoit la différence (V0) entre la valeur résultante (V1) de courant circulant dans la section protégée et la valeur résultante (V2) de courant circulant hors de la section protégée; où les moyens (82, 83, 86, 87) restreignant le fonctionnement du relais comprennent un générateur de signaux d'inhibition (82, 83, 86) qui reçoit ladite valeur résultante (V1) de courant circulant dans la section protégée et ladite valeur résultante (V2) de courant circulant hors de la section protégée et qui ne produit pas de signaux d'inhibition lorsqu'une valeur résultante est supérieure à l'autre valeur résultante de plus d'un rapport prédéterminé, l'agencement étant tel que le relais de protection différentielle fonctionne lorsque ledit générateur de signaux d'inhibition ne produit pas de signaux d'inhibition et que ledit détecteur de tension différentielle (84) produit une sortie, et où le moyen de dérogation (81, 86, 86, 87) produit des signaux d'inhibition, indépendamment du fait que le détecteur de tension différentielle (84) produit une sortie pendant ladite période prédéterminée de temps (t) suivant la fin d'une période dans laquelle lesdites deux valeurs résultantes (V1, V2) sont égales.

3. Un dispositif de relais de protection différentielle selon la revendication 2 dans lequel le moyen de dérogation précité (81, 85, 86, 87) comprend une unité arithmétique (81) qui reçoit comme entrées respectives les valeurs résultantes précitées (V1, V2) et dont la sortie est reliée à une horloge (85) dont la sortie est reliée au générateur de signaux d'inhibition (86), la sortie de l'unité arithmétique représentant une égalité des valeurs résultantes (V1, V2), ainsi l'horloge (85) produit un signal de sortie assurant une production continue des signaux d'inhibition pendant une période prédéterminée (t) après cessation de la sortie représentant une égalité de l'unité arithmétique (81).

FIG.1.

FIG.2.

FIG.3.

FIG.4.

FIG.5.